Europäisches Patentamt

European Patent Office

Office européen des brevets

(19)

(11) Numéro de publication : **0 479 667 A1**

(12) # DEMANDE DE BREVET EUROPEEN

(21) Numéro de dépôt : **91402615.8**

(22) Date de dépôt : **01.10.91**

(51) Int. Cl.⁵ : **B64F 1/02**

(30) Priorité : **05.10.90 FR 9012289**

(43) Date de publication de la demande :
**08.04.92 Bulletin 92/15**

(84) Etats contractants désignés :
**BE CH DE GB IT LI NL SE**

(71) Demandeur : **THOMSON-BRANDT ARMEMENTS**
**Tour Chenonceaux 204, rond-point du Pont de Sèvres**
**F-92516 Boulogne-Billancourt (FR)**

(72) Inventeur : **Bernard, Marc**
**THOMSON-CSF, SCPI, Cédex 67**
**F-92045 Paris la Défense (FR)**
Inventeur : **Thouron, René**
**THOMSON-CSF, SCPI, Cédex 67**
**F-92045 Paris la Défense (FR)**
Inventeur : **Caris, Jean-Pierre**
**THOMSON-CSF, SCPI, Cédex 67**
**F-92045 Paris la Défense (FR)**
Inventeur : **Morel, Christophe**
**THOMSON-CSF, SCPI, Cédex 67**
**F-92045 Paris la Défense (FR)**
Inventeur : **Tardy, Daniel**
**THOMSON-CSF, SCPI, Cédex 67**
**F-92045 Paris la Défense (FR)**

(74) Mandataire : **Benoit, Monique et al**
**THOMSON-CSF SCPI**
**F-92045 PARIS LA DEFENSE CEDEX 67 (FR)**

(54) **Procédé et dispositif de récupération de mobiles animés de grande vitesse.**

(57)   Procédé et dispositif de freinage du type comportant un obstable relié à un câble (10) lui-même relié à des moyens de freinage (16) de l'obstacle, caractérisé en ce que l'obstacle est constitué d'un bouclier (1) de retenue destiné à constituer la surface initiale de contact du mobile et de l'obstacle, ledit bouclier (1) étant lui-même couplé de façon lâche d'une part à des moyens de liaison (2, 3) au câble (10) de retenue, relié lui-même aux moyens de freinage (16), et d'autre part de façon lâche également à une structure (2) formée de parties (4) assemblées entre elles de façon lâches.

FIG_1

EP 0 479 667 A1

L'invention se situe dans le domaine des procédés et des dispostifs destinés à ralentir et éventuellement arrêter un mobile par interposition d'un obstacle sur sa trajectoire.

De tels procédés et dispositifs sont déjà connus de l'art antérieur notamment pour arrêter des avions en bout de piste .

Ainsi le brevet français n° 2. 207. 060 décrit un tel dispositif. Ce dispositif comporte un filet d'arrêt dans lequel l'avion vient se prendre. Ce filet est retenu par un dispositif de freinage qui l'empêche de poursuivre sa course vers l'avant et donc le retient. Ce dispositif est caractérisé en ce qu'il comporte plusieurs filets reliés les uns aux autres et situés les uns derrière les autres de telle sorte que l'ensemble des forces de retenues soit mieux réparti sur la structure de l'avion.

De tels procédés et dispositifs sont applicables à des mobiles de grandes surfaces animés de vitesse relativement faibles mais ne sont pas applicables à des mobiles animés de grandes vitesses.

Par grande vitesse, on entend une vitesse suffisante pour que la mise en mouvement de l'ensemble de l'obstacle à cette vitesse à partir de la surface initiale de contact du mobile et de l'obstacle puisse engendrer des contraintes suffisantes à l'intérieur de l'obstacle, par opposition des seules forces d'inertie pour briser l'obstacle avant qu'il n'ait pu prendre de la vitesse.

Il convient de noter que de tels dispositifs ne sont en général employés qu'en secours d'autres moyens et que dans ces conditions on accepte que l'emploi de ces dispositifs occasionne des dégâts mineurs sur la structure du mobile.

La présente invention vise un procédé et un dispositif destinés à arrêter des mobiles animés de grandes vitesses de façon controlée et progressive de façon à n'engendrer aucun dégât sur la structure du mobile à arrêter.

L'invention peut également être utilisée sur des mobiles animés de vitesses moindres chaque fois qu'un freinage progressif et controlé est recherché.

A cette fin l'invention a pour objet un procédé d'arrêt d'un mobile se déplaçant dans une direction D par interposition sur sa trajectoire d'un obstacle lié à un câble de retenue, comportant une partie libre et une partie non libre, caractérisé en ce que l'obstacle y compris le câble est interposé de façon séquentielle et progressive, partie par partie, une partie suivante de l'obstacle n'étant mise en mouvement qu'après qu'une partie précédente de l'obstacle y a été mise. Lorsque toutes les parties de l'obstacle y compris la partie libre du câble ont été mises en mouvement, on commence de façon progressive le freinage du câble de retenue de l'obstacle par mise en oeuvre de forces connues et controlées, exercées de façon continue et régulière sur la partie non libre du câble.

Le fait d'interposer l'obstacle de façon progressive partie après partie, la mise en mouvement d'une partie étant subordonnée à la mise en mouvement d'une partie précédente de l'obstacle, permet de réduire à chaque instant l'inertie du dispositif mis en mouvement de tel sorte que les contraintes à l'intérieur du dispositif d'arrêt restent à un niveau tel qu'on évite la rupture de l'obstacle.

Il en va de même pour le mobile qui ne subit de la part de l'obstacle pratiquement aucune contrainte, chacune des parties de l'obstacle ayant une inertie faible.

L'invention est également relative à un dispositif pour réaliser le procédé, dispositif destiné à arrêter un mobile du type comportant un obstacle relié à un câble lui-même relié à des moyens de freinage de l'obstacle caractérisé en ce que l'obstacle est constitué d'un bouclier de retenue destiné à constituer la surface initiale de contact du mobile et de l'obstacle, ledit bouclier étant lui-même couplé de façon lâche d'une part à des moyens de liaison au câble de retenue, relié lui-même aux moyens de freinage, et, d'autre part de façon lâche également à une structure formée de parties assemblées entre elles de façon lâche.

Par partie couplée ou assemblée de façon lâche à d'autres parties, on veut dire assemblée de telle sorte qu'il est possible de mouvoir l'une des partie sans nécessairement mouvoir la ou les parties avec laquelle ou lesquelles elle est assemblée.

De préférence le bouclier est constitué de deux couches de tissus, une première et une seconde, la première étant la première rencontrée par le mobile, séparées par une couche en matériau léger destinée à absorber une partie du choc de l'impact et à répartir les forces sur le tissus constituant la seconde couche.

Le matériau léger peut être par exemple une plaque de polystyrène expansé. Le fil constituant le tissus peut être un fil de polypropylène ou tout autre fil résistant par exemple une fibre KEVLAR.

De préférence également les moyens de liaison du bouclier au câble constituent eux-mêmes une partie de la structure.

Dans ces conditions, le rôle de la structure est double, d'une part elle assure une partie des forces de retenue du bouclier au câble et d'autre part elle constitue pour le mobile une enveloppe de maintien contre le bouclier.

Le câble de retenue est mis place de tel sorte que sa mise en mouvement se fait progressivement, élément de longueur par élement de longueur, ceci toujours dans le souci de limiter la masse mise en mouvement à chaque instant et donc de limiter les contraintes internes.

Le freinage de l'obstacle ne commence qu'après mise en mouvement et en tension de la partie de câble de retenue dite libre qui se trouve juste avant les moyens de freinage du câble.

De préférence le dispositif de freinage agit par action du câble sur de la matière, en particulier par cisaillement de matière, cisaillement dont l'épaisseur est déterminée en fonction des forces de retenue que l'on souhaite exercer à chaque instant.

Afin de mieux faire comprendre l'invention un exemple particulier de réalisation comportant une variante sera ci-après décrit. Cet exemple de réalisation est destiné à arrêter une munition tirée en tir tendu à partir d'un canon, dans le but de procéder à des contrôles sur cette munition après le tir et de vérifier les conditions d'endommagement éventuel de la munition par le tir.

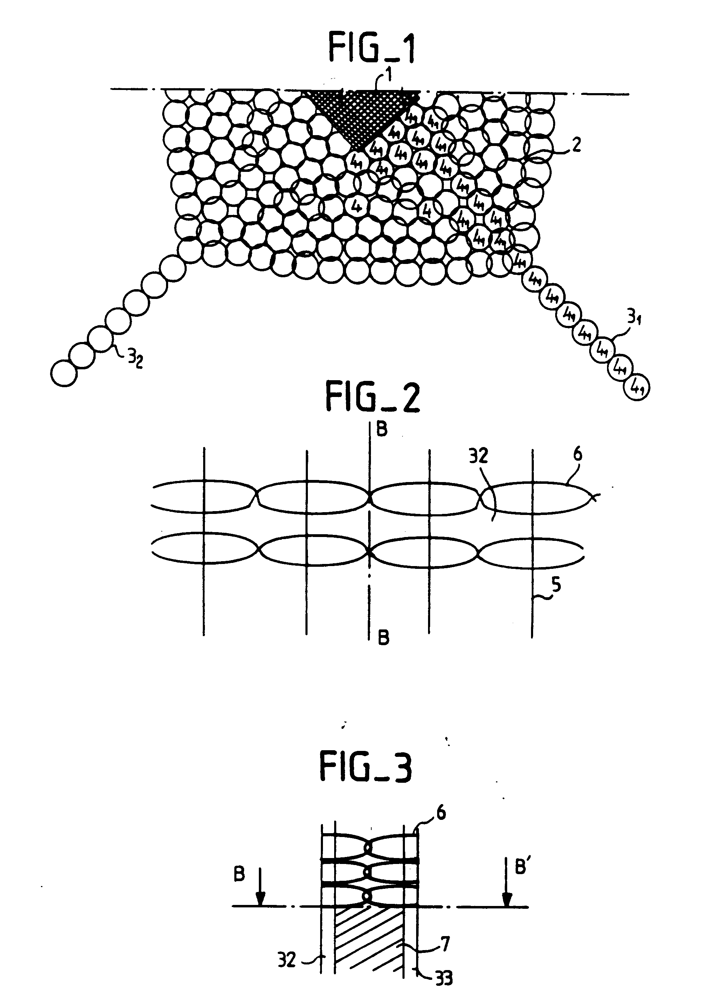

Cette description sera faite en référence aux dessins ci-annexés dans lequel la figure 1 représente le bouclier, la structure et les moyens de liaison au câble.

La figure 2 est une vue de face faisant apparaître le tissage du tissus constituant le bouclier.

La figure 3 est une vue de profil et en coupe du bouclier selon l'axe BB de la figure 2.

La figure 4 est une vue de profil de l'ensemble de l'installation d'arrêt et du canon lanceur du projectile.

La figure 5 représente les demi-vues de face gauche et droite de l'ensemble de l'installation d'arrêt.

La figure 6 est une vue de dessus de cette même installation.

La figure 7 est une vue en coupe longitudinale d'un premier exemple de réalisation du dispositif de freinage.

La figure 8 est une vue en coupe longitudinale du corps du dispositif de freinage, seul.

La figure 9 représente vue en coupe longitudinale un détail d'une partie du corps.

La figure 10 représente une vue de face d'une partie du corps d'un deuxième exemple de réalisation de dispositif de freinage.

La figure 11 représente cette même partie vue en coupe selon AA de la figure 10.

Les figures 12 à 14 illustrent les résultats obtenus par simulation avec le dispositif selon la première variante, c'est à dire celle utilisant le premier exemple de dispositif de freinage, dans le freinage d'un mobile de 18 kg lancé à 290 m/s.

Sur la figure 1 on voit un bouclier 1 de retenue d'un mobile, ce bouclier est situé au centre d'une structure 2 composée d'anneaux . Les éléments composant cette structure étant reliés de façon lache les uns aux autres, la structure peut prendre n'importe quelle forme, aussi, la représentation de la figure 1 est-elle une représentation à plat et tendue de cette structure, destinée à bien faire apparaître sa constitution. Le bouclier est sensiblement carré de même que la structure 2 composée d'anneaux 4. La diagonale du carré formant le bouclier 1 est disposé à 45° par rapport au côté du carré formant la structure 2. La structure 2 formée d'anneaux est elle- même reliée à quatre chaînes 3 constituées elles mêmes par des anneaux qui viennent se prendre sur les anneaux situés dans les coins de la structure 2.

Il convient de noter que la forme particulière représentée sur cet exemple n'est nullement impérative et que la forme du bouclier est relativement indépendante de la forme du reste de la structure. Ainsi le bouclier pourrait-il aussi bien être circulaire, rectangle elliptique... et la structure pourrait-elle aussi bien être elliptique circulaire rectangle ou même limitée par quatre arcs d'hyperbole ou polygonale.

L'homme du métier sera guidé dans le choix des formes par le but à atteindre et le coût de réalisation.

De même le nombre de chaînes n'est pas limité à quatre. Si n est le nombre choisi pour les chaînes il paraît cependant préférable qu'elles soient disposées de tels sortes que l'angle formé par deux chaînes consécutives soit égal à $\frac{2\P}{n}$.

Dans l'exemple de réalisation décrit la structure 2 est composée d'anneaux ayant tous le même diamètre d'anneaux ; ces anneaux sont cependant constitués de câble souple de diamètre différent selon l'emplacement de l'anneau dans la structure 2.

La structure 2 présente une symétrie par rapport à chacun des axes constituant chacune de ses diagonales. La nature des moyens de liaisons de chaque côté du carré constituant le bouclier, au coin du carré constituant la structure 2 qui est le plus proche de ce côté sera ci-après explicitée pour une de ces liaisons.

Chaque côté du bouclier est relié à cinq anneaux du plus fort diamètre de câble, les anneaux de coin étant reliés à deux côtés consécutifs il y a au total seize anneaux forts autour du bouclier. Chaque ligne de cinq anneaux est elle-même reliée dans la direction de la diagonale du carré constituant la structure 2 à quatre anneaux, cette ligne de quatre étant reliée à une ligne de trois anneaux, et cette ligne de trois anneaux reliée à une ligne de deux anneaux forts. Il y a ensuite plusieurs lignes de deux anneaux, la dernière d'entre elles située juste avant l'anneau vinique formant le coin du carré. C'est cet anneau de coin qui est relié au début de chacune des chaînes 3 constituées elle-même d'anneaux forts. L'ensemble des anneaux forts qui vient d'être décrit constitue les moyens de liaison du bouclier et du câble. Ces anneaux sont repérés $4_1$ en leurs centres sur la figure 1.

Il convient de souligner là encore que les anneaux forts $4_1$ pourraient être répartis de façon différente. On admettra dans ce qui suit que le nombre de chaînes 3 est égal à n et que deux chaînes consécutives font entre elles un angle égal à $\frac{2\P}{n}$ radians. Des droites issues du centre O de la structure et dont chacune d'entre elles fait avec la suivante un angle $\frac{2\P}{n}$ admettant pour bissectrice la direction de chacune des chaînes déterminent sur les bord du bouclier des arcs $M_1$, $M_2$...$M_n$. Chacun de ces arcs est relié à un nombre $m_1$, $m_2$...$m_n$ d'anneaux forts $4_1$. Les $m_1$,

$m_2...m_n$ anneaux constituent la première rangée d'anneaux forts en direction respectivement de chacune des chaines $3_1... 3_n$. Ce qui peut être dit d'une façon générale c'est que le nombre d'anneaux forts $4_1$, constituant chacune des rangées successives dans la direction de l'une des chaînes ne doit pas être supérieur au nombre d'anneaux de la rangée précédante dans cette direction.

Hormis les anneaux $4_1$, la structure 2 est constituée d'autres anneaux 4 dont le diamètre et donc la résistance à la traction est plus faible. Idéalement ce diamètre devrait être calculé en fonction des efforts que l'anneau subira compte tenu de sa place dans la structure. Ainsi la masse constituée par chacun des anneaux serait-elle directement proportionnée aux efforts que l'anneau subira compte tenu de sa place dans la structure. De cette façon la masse et donc l'inertie de la structure seraient réduits au mininum possible.

Cependant pour simplifier la fabrication on s'est limité dans cet exemple à trois diamètres de câble différents.

Chacun des anneaux internes à la structure est relié à six anneaux composants cette même structure ; chacun des anneaux externes, constituant les bords de la structure, sont quant à eux reliés chacun à trois autres anneaux, avec cette disposition l'ensemble de la structure 2 contribue à la liaison du bouclier au câble de retenue, l'essentiel des efforts étant supporté par les anneaux $4_1$ qui constituent le moyen proprement dit de liaison du bouclier au câble de retenue. Ces anneaux $4_1$ constituent donc eux-même une partie de la structure 2.

Le bouclier sera maintenant décrit en référence aux figures 2 et 3.

Ce bouclier est constitué par deux parties en tissus placées l'une derrière l'autre et entre lesquelles vient se loger une plaque en polystirène expansé. Les fils constituant le tissus sont en polypropylène.

La figure 2, représente une vue de face d'un morceau du tissus. Sur cette figure on voit les fils de trame 5 et les fils de ligne 6 ; étant donné le diamètre des fils, l'apparence du tissus est celle d'un ouvrage de vannerie. Le tissus est tissé de façon que les fils de lignes soient jointifs sans être sérrés.

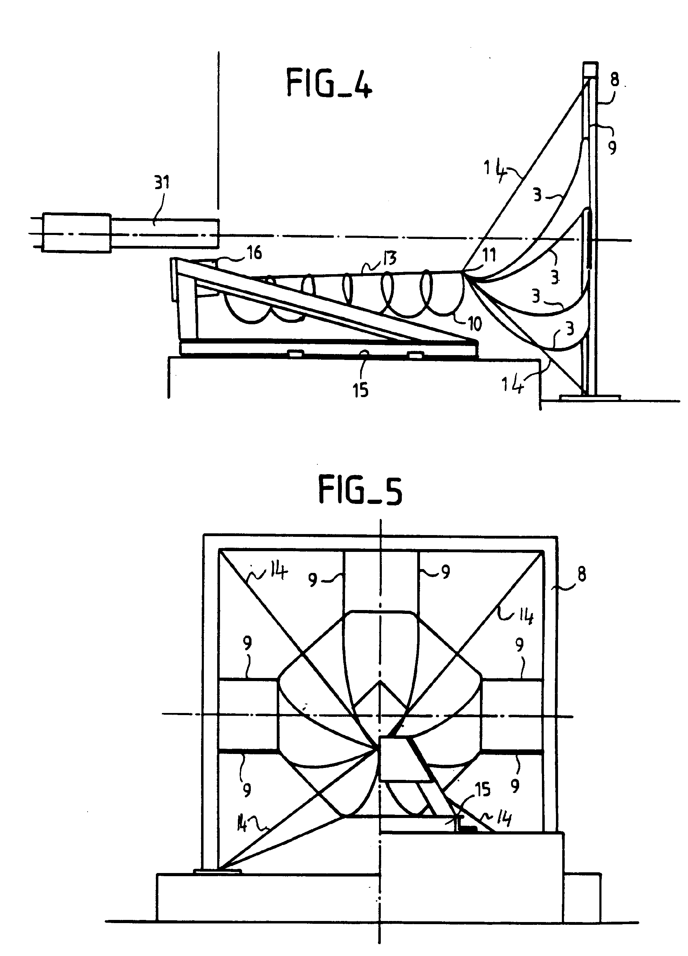

La figure 3 représente la vue de côté de ce même bouclier d'une part et d'autre part la vue de côté selon la coupe BB de la figure 2 de ce même bouclier. On voit sur la vue de côté les fils de lignes 6 qui sont enlacés de façon à assurer la liaison des deux nappes de tissus constituant chacune des faces du bouclier et l'on voit sur la vue en coupe de cette même figure 3 la plaque de polystyrène 7 placée entre les deux couches de tissus. L'ensemble du dispositif d'arrêt sera maintenant décrit en référence aux figures 4, 5 et 6.

On commencera par décrire comment la structure représentée sur la figure 1 sera installée sur le dispositif d'ensemble, en référence à ces mêmes figures 4, 5 et 6.

Sur chacune de ces figures on voit un bâti 8 qui supporte la structure 2, ce bâti est ancré sur un support béton. La structure 2 est fixée sur ce bâti au moyen de fils à casser 9 , les fils à casser 9 sont fixés d'une part au bâti et d'autre part à la structure 2 en six points, 2 sur chaque côté à l'exception du côté le plus bas, écartés de l'axe médian de chacun des côtés du carré formant la structure 2, d'une distance égale à environ un sixième de la longueur du coté du carré.

Ces fils ont une résistance à la traction tout juste supérieure au poids qu'ils supportent de façon à casser à la moindre traction.

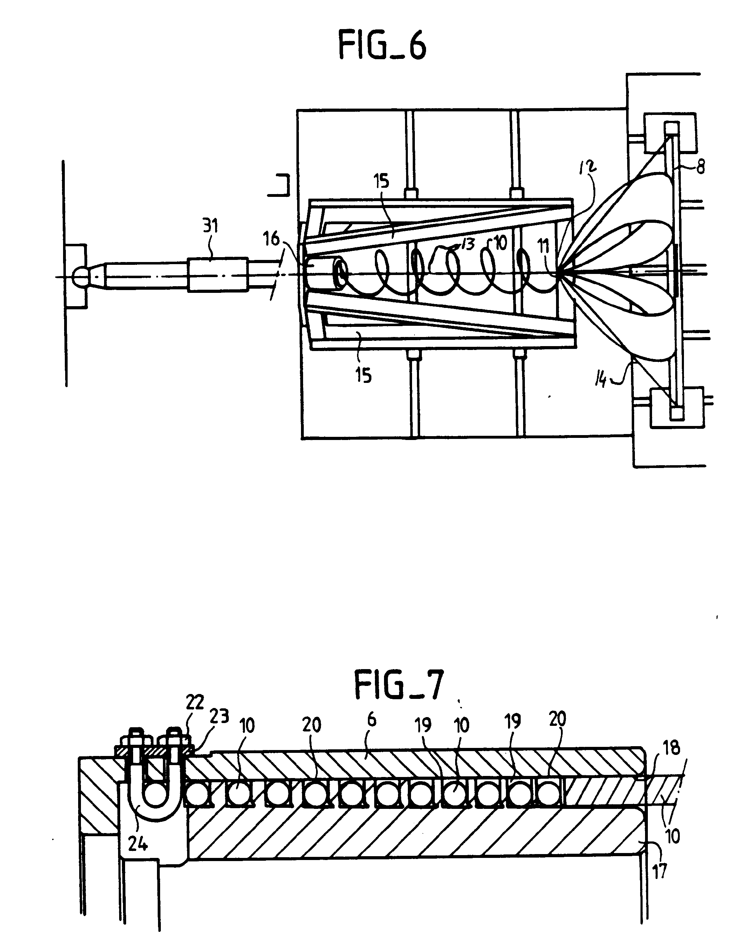

La position de ces fils apparaît bien sur la figure 5. Les chaînes 3 sont ramenées vers l'arrière leurs extrémités étant fixées à l'extrémité 11 d'un câble de retenue 10. Les chaînes 3 ne sont surtout pas tendues. L'extrêmité 11 du câble de retenue 10 est située dans le plan de symétrie de la structure 2, en arrière et légèrement plus bas que le bouclier 1. Cette disposition donne à la structure 2 une forme qui ressemble à celle d'un mouchoir que l'on replie en joignant les coins, elle laisse l'axe de la structure 2 dégagé, pour laisser libre le passage de la munition à arrêter, jusqu'au bouclier. Les anneaux n'exercent les uns sur les autres que la force résultant de leurs poids de sorte que la structure est lâche. L'extrêmité 11 du câble de retenue 10 est fixée à un anneau 12 utilisé également pour tendre au moyen de fils à casser 14 accrochés au bâti 8 un fil à casser de sustentation 13. Les anneaux terminaux des chaînes 3 sont également raccordés à l'anneau 12. Plusieurs spires du câble 10 sont attachées et maintenues par des fils à casser sur le fil de sustentation 13. L'extrêmité du fil de sustentation qui n'est pas reliée à l'extrémité 11 du câble de retenue est relié à un bâti 15 solidement ancré. Ce bâti supporte également un dispositif 16 de freinage du câble 10.

Ce dispositif constitue de même que la structure 2 une partie importante de l'invention car les mécanismes existants bien que capables d'absorber les grandes énergies cinétiques de mobiles de fortes masse et de vitesse relativement faible ne peuvent être utilisés pour arrêter des mobiles animés de grandes vitesses, car leur inertie est trop grande. Les contraintes qui seraient engendrées dans ces mécanismes au cours de la phase transitoire de mise en mouvement seraient telles, en raison de l'opposition des forces d'inertie, que le mécanisme se briserait avant d'avoir fonctionné. Les mécanismes de ce genre sont de plus encombrants et onéreux.

Le dispositif 16 est capable de freiner des mobiles animés de grande vitesse par exercice continu de forces de retenue connues, par emploi d'un procédé original. Il peut également fournir sous un faible encombrement un dispositif capable de freiner de façon contrôlée d'autres mobiles.

Le dispositif 16 utilise à cette fin un procédé de freinage progressif d'un câble accroché à un mobile se déplaçant dans une direction D caractérisé en ce que l'avancement du câble dans la direction D d'une longueur d est utilisé pour cisailler une épaisseur e de matière sur la même longueur d dégageant ainsi un copeau linéaire de longueur d.

De préférence l'épaisseur e de matière cisalllée va en croissant avec la longueur d. L'épaisseur e est ainsi une fonction monotone croissante de la longueur d. De préférence également la section droite du copeau dégagé par le cisaillement sur l'épaisseur e est telle que sa masse linéaire, c'est à dire la dérivée de la masse par rapport à la longueur, va en croissant avec la longueur d. La réalisation de cette condition implique que la surface de cette section droite est une fonction monotone croissante de d.

Cette façon de procéder permet de ne mettre en mouvement à chaque instant que des masses connues et contrôlées de matière et d'éviter ainsi les ruptures provoquées par opposition de forces d'inertie trop importantes.

Cette partie de l'invention a donc pour objet un dispositif de freinage progressif d'un câble accroché à un mobile progressant dans une direction D caractérisé en ce qu'il comporte un corps comportant une surface à partir de laquelle est creusée une gorge, dans laquelle est logé le câble à freiner, le creusement de la gorge provoquant sensiblement parallèlement à la direction D et tout le long de la gorge un affaiblissement relatif de parties du corps à la résistance au cisaillement, des moyens pour maintenir le câble dans le logement constitué par la gorge de telle sorte que la sortie de la gorge d'une longueur d de câble dans la direction D ne puisse se produire que par cisaillement sur la même longueur d des parties du corps affaiblies à la résistance au cisaillement par le creusement de la gorge.

C'est principalement le cisaillement des parties affaiblies du corps par le creusement de la gorge, ainsi que le frottement du câble le long du copeau dégagé par le cisaillement qui absorbera l'énergie communiquée au câble par le mobile . La masse linéaire du ou des copeaux dégagés pourra être modulée le long de la gorge pour être par exemple très faible pour les premières parties de câble libérées et aller en croissant régulièrement au fur et à mesure de la libération du câble.

Les moyens pour maintenir le câble dans le logement constitué par la gorge peuvent être un capot comportant une surface conjuguée de la surface du corps à partir de laquelle est creusée la gorge et des moyens de fixation du capot sur le corps. Par surface conjuguée on entend une surface qui tangente en tout point la partie en relief de surface du corps qui comporte la gorge servant de logement au câble.

De préférence le corps est un cylindre et la gorge a préférentiellement dans ce cas une forme de spirale ayant pour axe, l'axe du cylindre. Cette gorge est creusée à partir de la surface extérieure du cylindre.

De préférence la matière constituant le corps est de faible densité et de grande résistance au cisaillement.

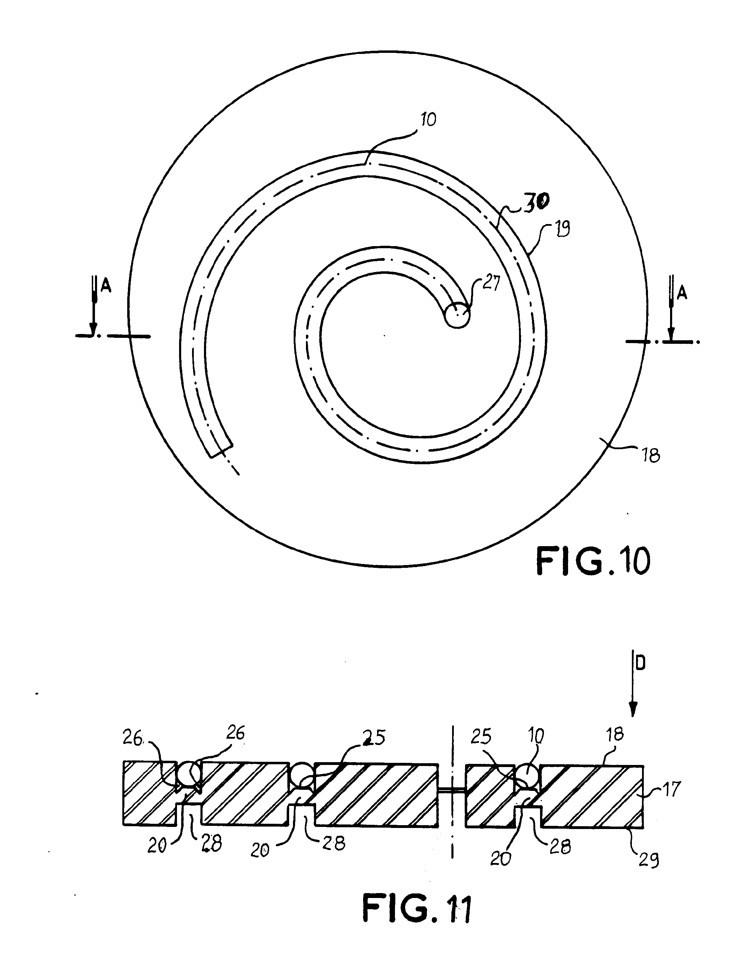

Deux exemples particuliers de réalisation seront maintenant décrits en référence aux figures 7 à 11 ; le premier fait l'objet des figures 7 à 9 et le second celui des figures 10 et 11.

Sur la figure 7 on voit le corps 17 en coupe longitudinale, il s'agit d'un cylindre creux en alliage d'aluminium (AU4G). A partir de la surface extérieure 18 de ce corps est creusée une gorge 19 de section trapézoïdale. Cette gorge a la forme d'une spirale faisant plusieurs fois le tour du corps creux 17. La largeur de la gorge est égale au diamètre du câble que l'on souhaite freiner, la hauteur de la gorge est très légèrement supérieure à ce diamètre en fin de spirale et va en croissant régulièrement lorsque l'on se rapproche de l'extrémité 11 du câble 10.

Le câble à freiner 10 est enroulé autour du corps creux 17, logé dans la gorge 19. Les espaces non creusés de la surface 18 constituent un bossage 20 qui forme le long de la gorge 19 une spirale continue dont la section droite est trapézoïdale. Un capot 21 est fixé sur le corps par des moyens de fixation non représentés. L'extrémité du câble 10 située à l'intérieur du dispositif 16 est fixée au dispositif 16 par des moyens de fixation (22, 23, 24).

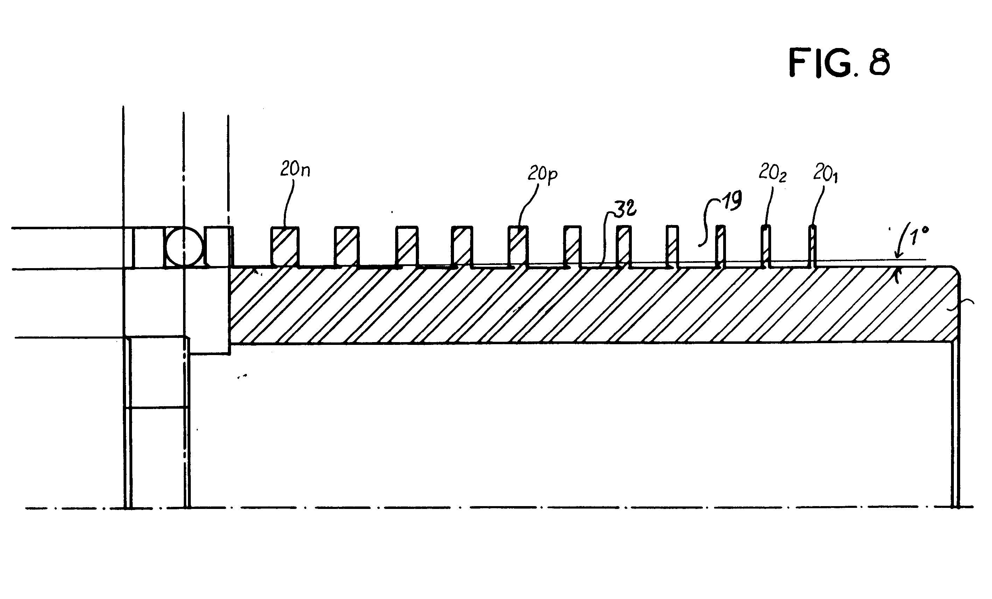

La forme générale du bossage 20 sera maintenant explicitée en référence à la figure 8.

Sur cette figure est représentée une coupe transversale du corps creux seul. La gorge faisant n fois le tour du corps creux 17 dégage le bossage continu en forme de spirale 20. les différentes sections droites de ce bossage ont été désignées $20_1$, $20_2$... $20_p$... $20_n$. Sur la figure 8 on voit que la largeur des sections droites va en augmentant de façon discontinue de la section droite $20_1$ à la section droite $20_n$ et que la hauteur de ces sections va en diminuant de façon discontinue. Les modifications discontinues de dimension ainsi représentées correspondent en fait à des modifications continues des dimensions du bossage 20 au cours de chacun des tours du tronc de cône. La hauteur du bossage 20 va en diminuant régulièrement de telle sorte que la surface engendrée à la surface du corps 17 par cisaillement du bossage constitue un tronc de cône ayant pour axe, l'axe du cylindre et pour angle au sommet 1° environ. Chacun des fonds 32 de la gorge 19 constitue un élément de la surface tronconique. C'est pour cette raison que les sections droites des bossages 20 et des gorges 19 sont dites trapézoïdales.

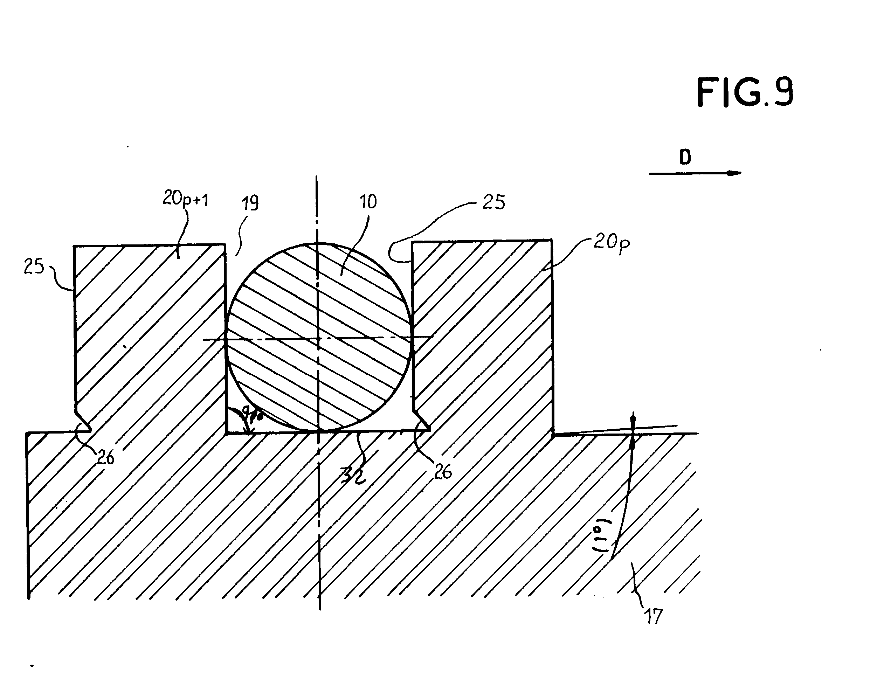

La figure 9 représente le détail de deux sections droites consécutives $20_p$ et $20_{p+1}$ du bossage 20, entre lesquelles a été représentée une section droite du câble 10.

Sur cette figure on voit que la largeur de la gorge est égale au diamètre du câble et que la hauteur est supérieure à ce diamètre. Cette différence entre la hauteur et la largeur croît régulièrement comme expliqué ci-dessus. On voit également que le bossage comporte sur le flanc opposé 25 à la direction de propagation D une amorce de rupture 26 située au bas du bossage et destinée à bien localiser le cisaillement au pied du bossage.

Le fonctionnement est le suivant:

Le corps 17 sur lequel est enroulé et fixé le câble 10 est arrimé au bâti 15 (figures 4, 5, 6). L'axe du corps 17 est parallèle à la direction de traction D du câble 10 par le mobile à freiner. Lorsqu'une traction est effectuée sur le câble 10 dans la direction D, la partie du câble 10 qui est à l'extérieur du corps 17 à tendance à se mettre à angle droit avec la partie du câble qui s'appuie sur le bossage 20. Si la traction est suffisante le bossage 20 se cisaille au niveau du changement de direction du câble ce qui permet la libération du câble de la longueur cisaillée. Le cisaillement du bossage 20 se poursuit de façon continue tant que la traction exercée sur le câble est suffisante par rapport à la force nécessaire au cisaillement du bossage 20. Il convient de noter que le copeau créé par le cisaillement à une tendance sous la pression du câble à se placer à 90° de la position qui était la sienne sur le corps. Il oppose à la pression du câble une résistance à la flexion en sorte qu'il forme un arrondi. Cet arrondi sur lequel s'appuie le câble contribue au déroulement régulier du câble. Au total il s'exerce sur le câble pour le ralentir, des forces de résistance au cisaillement, à la flexion, et des frottements du câble sur le flanc 25 du bossage opposé à la direction de traction D du câble, à l'endroit ou ce dernier se transforme en copeau. En raison de se frottement on peut augmenter l'efficacité du dispositif en augmentant par des traitements appropriés de la surface 25 du bossage 20 le coefficient de frottement de cette surface par rapport à la surface extérieure du câble 10. Le traitement de la surface 25 du bossage 20 pourra être un moletage. La légère conicité donné au fond de la gorge 19 du corps creux 17 est destinée à éviter que le câble 10 ne soit soumis à des à coups irréguliers par le bourrage des copeaux dégagés par le déroulement du câble.

D'autres formes de surface 18 du corps 17 pourrait être envisagées.

Ainsi les figures 10 et 11 représentent un deuxième exemple de réalisation dans lequel le corps 17, comporte une surface extérieure 18 en forme de cercle. Le corps 17 a dans ce cas la forme d'une plaque plane dont le plan est perpendiculaire à la direction de traction D du câble 10. Cette plaque comporte sur l'une des ses faces la surface 18 et sur l'autre la surface dite opposée 29. Sur ces figures n'ont 'été représentés que les éléments utiles à la compréhension du fonctionnement. En particulier le capot 21 de fixation du câble 10 et sa fixation sur la surface 18 n'ont pas été représentés. De même les moyens de fixation de la plaque constituant le corps 17, sur son bâti de retenue 15, n'ont pas été représentés.

Ainsi les figures 10 et 11 représentent la partie du corps 17 limité à la surface 18. La figure 10 est une vue de face lorsqu'on regarde dans la direction D, la figure 11 est une vue en coupe selon l'axe AA de la figure 10.

Sur la figure 10 on voit la surface 18 à partir de laquelle est creusée une gorge 19, dans laquelle vient se lover le câble 10. Cette gorge suit un axe médian 30. Sur la figure 10 il a été représenté une gorge dont l'axe médian 30 est une courbe en forme de spirale. N'importe quelle autre forme de courbe pourrait convenir. Il convient toutefois d'éviter les courbes contenant un point de rebroussement. Un trou 27 dans le corps 17 permet le passage du câble dans la direction D.

Sur la figure 11 on voit que le corps 17 comporte une gorge 28 creusée à partir de la surface opposée 29 du corps 17. Cette gorge 28 est creusée en regard de la gorge 19. Le creusement des gorges 19 et 28 laisse subsister une épaisseur de matière 20 qui sera cisaillée par la traction du câble 10. Deux amorces de rupture 26 sont creusées dans l'épaisseur 20, au fond de la gorge 19, de façon à assurer la régularité du cisaillement. Comme dans le cas de l'exemple précédent la face 25 de l'épaisseur 20 en contact avec le câble 10 et soumise à sa pression pourra être traitée pour créer un coefficient de frottement supérieur. La profondeur de la gorge 28 est maximum au début, qui correspond à la traversée 27 de la plaque par le câble. Elle va en diminuant régulièrement ensuite de telle sorte que l'épaisseur 5 à cisailler va en croissant régulièrement comme dans l'exemple précédent.

Le fonctionnement de l'ensemble du dispositif est le suivant :

Une munition tirée par le canon 31 représenté figure 3 et 4 vient heurter le bouclier 1. Le choc rompt les fils à casser 9, laissant libre l'ensemble de la structure 2, soumise aux seules forces d'inertie. Le mouvement du bouclier 1 vers l'avant s'effectue en trois temps , dans un premier temps seul le tissu avant est entraîné dans un deuxième temps le corps intermédiaire 7 en matériau peu dense est entraîné, cet entraînement se fait avec pénétration partielle du corps 7 par la munition, enfin dans un troisième temps le tissu constituant la face arrière du bouclier est entraîné. A ce moment les anneaux fixés au bouclier entrent en mouvement et entraînent successivement en mouvement les différents anneaux constituant la structure 2 jusqu'à entraîner la partie des anneaux $4_1$ constituant les chaînes 3 eux même liés à l'anneau 12 lui même relié au câble 10 de retenue. Le fil 13 sur lequel est fixé le câble de retenu casse libérant les spires quine sont plus soumises qu'à leur seule inertie et qui avant d'être tombées au sol, sont entraînées une à une par le mobile jusqu'à mettre le câble 10 en tension complète. A ce moment le câble appuie sur le flanc 25 du bossage 20 du dispositif de retenu 16 qu'il cisaille. Le câble continue sa progression en cisaillant l'épaisseur 20 comme il a été indiqué plus haut jusqu'à l'obtention du freinage.

On voit ainsi que la mise en vitesse de la masse constituant l'obstacle - bouclier 1, structure 2, chaînes 3 et câble 10 - s'effectue élément par élément et que le freinage ne commence que lorsque l'ensemble de l'obstacle a été mis en vitesse.

Le contrôle de la masse et de l'épaisseur 20 cisaillée permettent de doser à chaque instant l'effort exercé sur le câble 10 pour qu'aucun élément du dispositif ne soit soumis à des contraintes qui entraîneraient sa rupture.

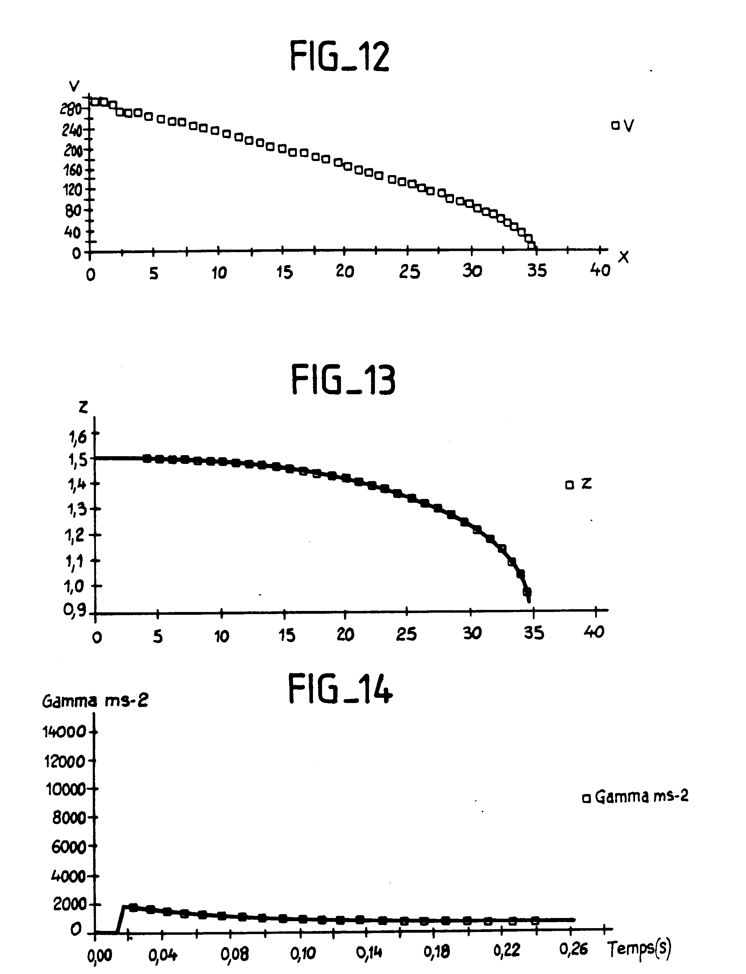

Les performances simulées obtenues avec une munition de 18 kg tiré à 290 m/s sont représentées par les courbes objet des figures 12 à 14.

Les courbes 12 et 13 représentent respectivement, en fonction de la distance parcourue exprimée en mètres, la vitesse du mobile exprimée en mètres par seconde et la hauteur z du mobile exprimée en mètres.

La courbe 14 représente la valeur de la décélération en $m/s^{-2}$ en fonction du temps en secondes.

Ces courbes montrent que la vitesse décroit de façon très régulière et que la décélération est sensiblement constante à environ 2000 $m/s^{-2}$. Le mobile est freiné sur 35 m en un peu moins de 0,3 s. Les essais déjà effectués confirment les essais réalisés en simulation numérique.

**Revendications**

1. Procédé d'arrêt d'un mobile se déplaçant dans une direction D par interposition sur sa trajectoire d'un obstacle lié à un câble de retenue, comportant une partie libre et une partie non libre, caractérisé en ce que l'obstacle y compris le câble est interposé de façon séquentielle et progressive, partie par partie, une partie suivante de l'obstacle n'étant mise en mouvement qu'après qu'une partie précédente de l'obstacle y a été mise, le freinage du câble ne commençant par mise en oeuvre de forces connues et contrôlées exercées de façon continue et régulière sur la partie non libre du câble qu'après que toutes les parties de l'obstacle y compris la partie libre de câble aient été mises en mouvement.

2. Procédé selon la revendication 1, caractérisé en ce que la mise en oeuvre des forces connues et contrôlées de retenue du câble est obtenue par cisaillement par le câble d'une épaisseur e de matière sur une longueur d égale à la progression d du mobile, ce cisaillement créant un copeau de longueur d.

3. Procédé selon la revendication 2, caractérisé en ce que la masse linéaire du copeau dégagé va en croissant avec la longueur d.

4. Dispositif destiné à arrêter un mobile selon le procédé définit en revendication 1 du type comportant un obstacle relié à un câble (10) lui-même relié à des moyens de freinage (16) de l'obstacle, caractérisé en ce que l'obstacle est constitué d'un bouclier (1) de retenue destiné à constituer la surface initiale de contact du mobile et de l'obstacle, ledit bouclier (1) étant lui-même couplé de façon lâche d'une part à des moyens de liaison (2, 3) au câble (10) de retenue, relié lui-même aux moyens de freinage (16), et, d'autre part de façon lâche également à une structure (2) formée de parties (4) assemblées entre elles de façon lâches.

5. Dispositif selon la revendication 4, caractérisé en ce que le bouclier (1) est constitué de deux couches de tissus (32-33) entre lesquelles est insérée une plaque intermédiaire (7) en matériau peu dense.

6. Dispositif selon la revendication 5, caractérisé en ce que les fils de trame (5) et de chaîne 6 constituant les couches de tissus (32-33) sont en polypropilène.

7. Dispositif selon la revendication 5, caractérisé en ce que le matériau constituant la plaque intermédiaire (7) est en polystirène expansé.

8. Dispositif selon la revendication 4, caractérisé en ce que la structure (2) est constituée d'anneaux (4) emboîtés les uns dans les autres.

9. Dispositif selon la revendication 8, caractérisé en ce que l'emboîtement des anneaux est réalisé de façon telle que les anneaux constituant les limites de la structures sont chacun emboîté dans trois anneaux adjacents et que les anneaux internes à la structure sont chacun emboîtés dans six anneaux adjacents.

10. Dispositif selon la revendication 4, caractérisé en ce que les moyens de liaison du bouclier (1) au câble (10) sont constitués d'anneaux ($4_1$) incorporés à la structure (2) et formant en dehors de celle-ci des chaînes (3).

11. Dispositif selon la revendication 10, caractérisé en ce que les anneaux ($4_1$) constituant les moyens de liaisons du bouclier (1) au câble (10) sont constitués de fils plus résistants à la traction que ceux des anneaux (4) formant le reste de la structure (2).

**12.** Dispositif selon la revendication 11, caractérisé en ce que les anneaux (4₁) constituant les moyens de liaison du bouclier (1) au câble (10) forment dans chacune des directions définies par chacune des chaînes (3) des rangées successives d'anneaux et en ce que le nombre d'anneaux de chacune des rangées n'est pas supérieur au nombre d'anneaux de la rangée précédente.

**13.** Dispositif selon la revendication 10, caractérisé en ce que l'obstacle constitué du bouclier (1) et de la structure (2) est suspendu en travers de la trajectoire du mobile à un bâti (8) par des fils à casser (9).

**14.** Dispositif selon la revendication 13, caractérisé en ce que les chaînes (3) sont acrochées aux câble de retenue (10) à l'une de ses extrémités (11) par un anneau 12 suspendu par des fils à casser (14).

**15.** Dispositif selon la revendication 14, caractérisé en ce que le câble de retenue (10) décrit plusieurs spires entre les moyens de freinage (16) et l'anneau (12) de raccordement aux chaînes (3) les spires étant attachées par du fil à casser à un fil à casser (13) lui-même relié à l'anneau (12).

**16.** Dispositif selon l'une des revendications 4 à 15, caractérisé en ce que les moyens de freinage (16) comportent un corps (17) comportant une surface (18) à partir de laquelle est creusée une gorge (19) dans laquelle est logée le câble (10) à freiner, le creusement de la gorge provoquant sensiblement parallèlement à la direction D et tout le long de la gorge un affaiblissement relatif d'une partie (20) du corps (17) à la résistance au cisaillement, des moyens pour maintenir le câble (10) dans le logement constitué par la gorge (19) de telle sorte que la sortie de la gorge d'une longueur d de câble dans la direction D ne puisse se produire que par cisaillement d'une épaisseur e sur la même longueur d de la partie (20) du corps (17) affaiblie à la résistance au cisaillement par le creusement de la gorge (19).

**17.** Dispositif selon la revendication 16, caractérisé en ce que l'épaisseur e de matière à cisailler est une fonction monotone croissante de la longueur d.

**18.** Dispositif selon l'une des revendications 16 ou 17, caractérisé en ce que la section droite de la partie affaiblie (20) du corps (17) à une surface qui est une fonction monotone croissante de d.

**19.** Dispositif selon l'une des revendications 16 à 18, caractérisé en ce que les moyens de maintien du câble (10) dans la gorge (19) sont constitué par une surface conjuguée de la surface (18) du corps (17).

**20.** Dispositif selon l'une des revendications 16 à 19, caractérisé en ce que la matière constituant le corps (17) est un alliage d'aluminium.

**21.** Dispositif selon l'une des revendications 16 à 20, caractérisé en ce que le corps (17) est un cylindre d'axe parallèle à la direction D et en ce que la gorge (19) décrit une spirale sur la surface extérieure (18) de ce cylindre, la spirale ayant pour axe, l'axe du cylindre.

**22.** Dispositif selon la revendication 21, caractérisé en ce que la surface du fond (32) de la gorge (19) se situe entièrement sur un tronc de cône ayant pour axe, l'axe du cylindre et pour angle au sommet un angle de 1° environ.

**23.** Dispositif selon l'une des revendications 16 à 20, caractérisé en ce que le corps (17) est une plaque dont les faces (18, 29) sont perpendiculaires à la direction D comportant sur l'une de ses faces (18) une gorge (19) dont l'axe médian (30) décrit une courbe sans point de rebroussement, terminée par un trou 27.

**24.** Dispositif selon la revendication 23 , caractérisé en ce que l'autre face (29) de la plaque (17) comporte une gorge (28) creusée en regard de la gorge (19) dont la profondeur est une fonction monotone décroissante de d.

**25.** Dispositif selon l'une des revendications 16 à 24, caractérisé en ce que la face (25) d'appui du câble (10) tracté dans la direction D a subit un traitement augmentant son coefficient de frottement.

**26.** Dispositif selon l'une des revendications 16 à 25, caractérisé en ce que la face (25) d'appui du câble (10) tracté dans la direction D comporte une amorce de rupture (26) placée au début de l'épaisseur e à cisailler par le câble (10).

## FIG_1

## FIG_2

## FIG_3

# FIG_4

# FIG_5

## FIG_6

## FIG_7

FIG. 8

EP 0 479 667 A1

FIG.9

FIG.10

FIG.11

# FIG_12

# FIG_13

# FIG_14

EP 0 479 667 A1

Office européen
des brevets

**RAPPORT DE RECHERCHE EUROPEENNE**

Numero de la demande

EP 91 40 2615

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 430 897 (PETERSON) <br> * Colonne 1, ligne 48 - colonne 2, ligne 11 * <br> --- | 1 | B 64 F 1/02 |
| X | US-A-3 670 852 (YARM) <br> * Colonne 3, lignes 35-42 * <br> --- | 2,3 | |
| A | US-A-2 957 657 (FRIEDER) <br> * Colonne 2, lignes 19-38 * <br> --- | 4 | |
| A | FR-A-1 235 511 (AERAZUR CONSTRUCTIONS AERONAUTIQUES) <br> * Page 1, colonne de droite, lignes 3-16 * <br> --- | 1,14 | |
| D,A | FR-A-2 207 060 (UNITED KINGDOM OF GREAT BRITAIN AND NORTHERN IRELAND) <br> * Le document en entier * <br> ----- | 1 | |

DOMAINES TECHNIQUES
RECHERCHES (Int. Cl.5)

B 64 F
F 16 F
F 41 J

Le présent rapport a été établi pour toutes les revendications

| Lieu de la recherche | Date d'achèvement de la recherche | Examinateur |
|---|---|---|
| LA HAYE | 20-12-1991 | HAUGLUSTAINE H.P.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........
& : membre de la même famille, document correspondant

EPO FORM 1503 03.82 (P0402)

16